# EUROPÄISCHE PATENTSCHRIFT

(11) **EP 0 750 577 B1**
(45) Veröffentlichungstag und Bekanntmachung des Hinweises auf die Patenterteilung: **29.12.1997**
(21) Anmeldenummer: 95913092.3
(22) Anmeldetag: 13.03.1995
(51) Int. Cl.: B65G 19/20, B61B 10/04

(54) **KREIS- ODER SCHLEPPKREISFÖRDERER**
MONO-OR TWIN-RAIL OVERHEAD CHAIN CONVEYOR
CONVOYEUR AERIEN A SIMPLE VOIE OU A DOUBLE VOIE

(30) Priorität: 14.03.1994 DE 9404183 U
(43) Veröffentlichungstag der Anmeldung: 02.01.1997
(73) Patentinhaber: FREDENHAGEN GmbH & Co. KG., 63069 Offenbach (DE)
(72) Erfinder: KNÜTTEL, Werner, D-63538 Grosskrotzenburg (DE)
(74) Vertreter: Stoffregen, Hans-Herbert, Dr. Dipl.-Phys.
(86) Internationale Anmeldenummer: EP9500923
(87) Internationale Veröffentlichungsnummer: WO9525056

(56) Entgegenhaltungen:
- DE-A- 2 149 971
- NL-A- 7 014 018
- US-A- 3 443 526
- US-A- 3 615 003
- US-A- 3 627 595
- US-A- 3 638 780

## Beschreibung

Die Erfindung bezieht sich auf einen Kreis- oder Schleppkreisförderer, insbesondere bestimmt zum Transportieren schwerer Lasten wie Kraftfahrzeugteile, mit einer Schlepplaufbahn in Form eines I-Profils mit entlang dieser verfahrbaren Laufwerken mit Rollenböcken zur Lagerung von auf der Schlepplaufbahn sich abstützenden Rollen, wobei die Rollenböcke mit einem Zugmittel zum Ziehen der Laufwerke verbunden sind, und wobei bei einem Kreisförderer Laufwerke als Lastlaufwerke und bei einem Schleppkreisförderer Laufwerke als Schlepplaufwerke ausgebildet sind, die mit auf einer unterhalb der Schlepplaufbahn verlaufenden Lastlaufbahn verfahrbaren Lastlaufwerken wechselwirken.

Kreis- und Schleppkreisförderer sind Stetigförderer, bei denen das Fördergut immer unterhalb eines einsträngig geführten Zugmittels, also hängend transportiert wird. Dabei ist der Fördervorgang zwangsläufig, wobei die Förderstrecke beliebig im Raum angeordnet sein kann und Kurven sowohl in waagrechter als auch in senkrechter Ebene verlaufen können.

Als Zugmittel werden grundsätzlich Stahlketten in Form von Steck- und Laschenketten benutzt. Nur für Kreisförderer leichter Bauart kommen auch Stahlseile oder Textilseile in Frage, so daß zwangsläufig in der Regel formschlüssige Antriebe gewährleistet sind.

Unabhängig von der Art des Zugmittels bedarf dieses jedoch einer intensiven Wartung und Überprüfung.

Aus der NL-A-7 014 018 ist ein Endlosförderer bekannt, bei dem als Zugmittel ein Kabel verwendet wird, welches zum Korrosionsschutz z.B. mit Nylon unmantelt ist.

Neben den klassischen Kreis- und Schleppkreisförderern, wie diese zum Beispiel in Lueger Lexikon der Technik, Fördertechnik und Fabrikorganisation, Band 1, Seite 246 ff., veröffentlicht im Rowohlt Taschenbuch Verlag GmbH abgebildet und beschrieben sind, sind eine Vielzahl von Hängefördereinrichtungen mit Konstruktionsmerkmalen bekannt, die von den eingangs beschriebenen abweichen. So wird bei einem Gehängeförderer nach der DE-AS 1 230 354 ein hochkant laufender Zuggurt verwendet, in dem mehrere parallel in Längsrichtung laufende Zugseile einvulkanisiert sind. Eine entsprechende Gehängeförderung ist jedoch ausschließlich dazu geeignet, in einer waagerecht verlaufenden Ebene eingesetzt zu werden, da andernfalls eine so unterschiedliche Zugbelastung auf die übereinander angeordneten Zugseile erfolgen würde, daß diese brechen wurden.

Hängevorrichtungen bestimmt zum Transport von Bekleidungsgütern sind den DE 40 17 821 A1 und DE 35 10 195 A1 zu entnehmen. Dabei kann ein Antriebsriemen mit Mitnehmern von Tragbügeln wechselwirken, um diese entlang einer durch ein Vierkantprofil gebildeten Führungsbahn zu verfahren. Zur Führung des Antriebsrahmens sind speziell gestaltete Kunststoffschienen erforderlich.

Bei Lastträgern nach den DE 41 21 772 A1, DE 27 40 594 A1, US 26,78,718, US 2,980,258 oder DE 25 45 676 A1 gelangen Kettenglieder zum Einsatz, die zum Beispiel über Reibräder antreibbar sind. Die Kettenglieder können in ihren Verbindungspunkten mit Schlepplaufwerken verbunden sein.

Der vorliegenden Erfindung liegt das Problem zugrunde, einen Kreis- bzw. Schleppkreisförderer der zuvor genannten Art so weiterzubilden, daß ein nahezu wartungsfreies Zugmittel benutzt werden kann, welches problemlos antreibbar ist und welches bezüglich des Streckenverlaufs auf einfache Weise geführt werden kann, ohne daß jedoch konstruktive Änderungen an dem Kreis- bzw. Schleppkreisförderer zumindest im bezug auf die Schlepp- und Lastlaufbahn vorgenommen werden müssen.

Das Problem wird im wesentlichen dadurch gelöst, daß das Zugmittel ein aus Gummi- oder Kunststoffmaterial bestehender Gurt ist, der eine einsträngige Einlage aus Metall, Glasfaser oder Kohlefaser aufweist. Insbesondere handelt es sich bei dem Gurt um einen Gummigurt mit rechteckigem Querschnitt, wobei vorzugsweise konzentrisch zur Längsachse des Gurtes eine Stahleinlage einvulkanisiert ist.

Durch die erfindungsgemäße Lehre werden die bei dem bekannten Kreis- oder Schleppkreisförderer aufgrund der verwendeten Steck- und Laschenketten immanenten Nachteile ausgeräumt, ohne daß die durch einen Kreis- und Schleppkreisförderer erzielten Vorteile verlassen werden.

Dadurch, daß sich der erfindungsgemäße Kreis- und Schleppkreisförderer in bezug auf den bekannten nur dadurch unterscheidet, daß die Steck- oder Laschenkette durch den eine Stahlanlage aufweisenden Gummigurt ersetzt wird, bedarf es der für Ketten erforderlichen Schmiermittel nicht. Auch wird ein Verschleiß vermieden, der ansonsten in den Gelenken der Kettenglieder auftritt. Vorteilhaft ist des weiteren, daß der Kreis- und Schleppkreisförderer geräuscharm arbeitet.

Dennoch können mit dem erfindungsgemäßen Kreis- und Schleppkreisförderer Zugkräfte übertragen werden, die von Steck- und Laschenketten bekannt sind, da der Gummigurt die vorzugsweise als Stahlseil ausgebildete Metalleinlage aufweist.

Da die Einlage wie Metalleinlage einsträngig ist und sich insbesondere koaxial zur Längsachse des Gurtes erstreckt, können problemlos Gefäll- und Steigstrecken durchfahren werden, da die Stahleinlage stets gleichermaßen belastet wird, also keine unterschiedlichen Zugbeanspruchungen auftreten.

Durch die Verwendung eines Gurtes können im Vergleich zu einem Kreis- und Schleppkreisförderer mit üblicher Kette höhere Fördergeschwindigkeit erzielt werden.

Die Geschwindigkeit kann dabei um 50 - 100 % erhöht werden.

Auch sind weniger Spannstationen erforderlich, da erwähntermaßen ein Verschleiß am Zugmittel nur im verschwindenden Umfang auftritt. Demgegenüber sind die Kettenglieder einer Zugkette einem erheblichen Verschleiß ausgesetzt.

Durch die Verwendung eines aus Kunststoff und insbesondere aus Gummi bestehenden Gurtes besteht ferner die Möglichkeit eines problemlosen Einsatzes in der lebensmittelverarbeitenden Industrie, da weder ein Schmieren des Zugmittels erforderlich ist, noch das Zugmittel schwer zugängliche Bereiche aufweist.

Damit auch ohne grundsätzliche Veränderungen an den Schlepplaufwerken und damit der Rollenböcke das erfindungsgemäß vorgeschlagene Zugmittel eingesetzt werden kann, sieht eine Weiterbildung der Erfindung vor, daß der Gurt seitliche Ausschnitte zur Aufnahme von Rollenbockschenkeln der Schlepplaufwerke aufweist.

Der Gurt selbst kann eine Breite aufweisen, die der einer in einem Kreis- oder Schleppkreisförderer verwendeten Steck- oder Laschenkette entspricht. Auch hierdurch wird unterstrichen, daß - mit Ausnahme des Zugmittels - ohne konstruktive Veränderungen an bekannten Kreis- bzw. Schleppkreisförderer die erfindungsgemäße Lehre eingesetzt werden kann.

Um auf einfache Weise das Zugmittel durch zum Beispiel Reibschluß antreiben zu können, sieht eine Weiterbildung der Erfindung vor, daß der Gurt in seinen Seitenflächen bündig oder nahezu bündig zu Außenflächenschenkel der Rollenböcke verläuft, so daß diese zu einer Beeinträchtigung des Antriebes nicht führen.

Sollte aufgrund eines Störfalls der aus Gummi oder Kunststoff bestehende Gurt durchtrennt sein, so kann auf einfache Weise eine Reparatur dadurch vorgenommen werden, daß Metalleinlagen der Enden des Gurtes freigelegt und über Klemmelemente mit einem parallel zu den Enden verlaufenden Drahtseil verbunden werden.

Nach einem selbständigen Erfindungsvorschlag ist die Verwendung eines aus Gummi- oder Kunststoffmaterial bestehenden Gurtes mit koaxial zu dessen Mittelachse verlaufender Stahleinlage als Ersatz für eine Steck- oder Laschenkette eines Kreis- oder Schleppkreisförderers vorgesehen, der eine Schlepplaufbahn in Form eines I-Profils mit entlang diesem verfahrbaren Laufwerken umfaßt, die mit auf unterhalb der Schlepplaufbahn verlaufender Lastlaufbahn verfahrbaren Lastlaufwerken wechselwirken oder selbst als Lastlaufwerke ausgebildet sind.

Bei einem erfindungsgemäßen Kreis- oder Schleppkreisförderer kann der Gurt zwischen als Antrieb dienenden Reibrädern geführt sein.

Alternativ besteht die Möglichkeit, daß der Gurt zwischen als Antrieb dienenden umlaufenden Riemen geführt ist. Schließlich kann vorgesehen sein, daß entlang einer Seite des Gurtes mehrere eine Linie bildende Andruckrollen angeordnet sind, wohingegen auf der gegenüberliegenden und den Andruckrollen zugeordnet ein umlaufender Riemen vorgesehen ist. Zwischen dem Riemen und den Andruckrollen wird der Gurt geführt und durch Reibschluß erfolgt der Antrieb.

Um Horizontalkurven zu bilden, ist es nur erforderlich, daß der Gurt entlang Rollen geführt ist, deren Achsen auf einen Bogen- wie Kreisabschnitt liegen. Alternativ kann der Gurt entlang eines Abschnitts einer drehbar gelagerten Scheibe geführt sein.

Aber auch ein vertikaler Kurvenverlauf ist auf einfache Weise realisierbar. So ist es nur erforderlich, daß zwischen mittelbar oder unmittelbar mit einem Lastträger verbundenen Laufwerken von der Laufbahn ausgehende und mit dem Gurt verbundene Abstandshalter angeordnet sind, wodurch sichergestellt ist, daß der Gurt dem durch die Laufbahn vorgegebenen Verlauf folgt.

Selbstverständlich ist die erfindungsgemäße Lehre auch auf einen Bodenförderer übertragbar, der - wie bei einem Kreis- oder Schleppkreisförderer - konstruktiv nicht verändert werden muß, da allein ein Austausch des Zugmittels erfolgen muß.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:
- Fig. 1: einen Ausschnitt aus einem Schleppkreisförder nach dem Stand der Technik,
- Fig. 2: den Schleppkreisförderer nach Fig. 1 in Richtung A,
- Fig. 3: einen Ausschnitt aus einem erfindungsgemäß ausgebildeten Schleppkreisförderer,
- Fig. 4: den Schleppkreisförderer nach Fig. 3 in Richtung A,
- Fig. 5: einen Ausschnitt aus einem Kreisförderer nach dem Stand der Technik,
- Fig. 6: den Kreisförderer nach Fig. 5 in Richtung A,
- Fig. 7: einen Ausschnitt aus einem erfindungsgemäß ausgebildeten Kreisförderer,
- Fig. 8: den Kreisförderer nach Fig. 7 in Richtung A
- Fig. 9: einen Ausschnitt eines Laufwerks des Schleppkreisförderers nach Fig. 1,
- Fig. 10: einen Querschnitt durch ein erfindungsgemäß verwendetes Zugmittel für den Schleppkreisförderer gemäß Fig. 3,
- Fig. 11: einen Ausschnitt eines Laufwerks des Schleppkreisförderers nach Fig. 3,
- Fig. 12: eine Hilfsverbindung von Abschnitten eines erfindungsgemäß verwendeten Zugmittels,
- Fig. 13: eine erste Ausführungsform einer Horizontalkurve des Zugmittels mit Antrieb für dieses,
- Fig. 14: eine zweite Ausführungsform einer Horizontalkurve des Zugmittels mit Antrieb für dieses,
- Fig. 15: einen Ausschnitt einer Vertikalkurve eines Schleppkreisförderers,
- Fig. 16: einen Ausschnitt einer Vertikalkurve eines Schleppkreisförderers und
- Fig. 17-19: verschiedene Ausführungsformen von Antrieben für das Zugmittel.

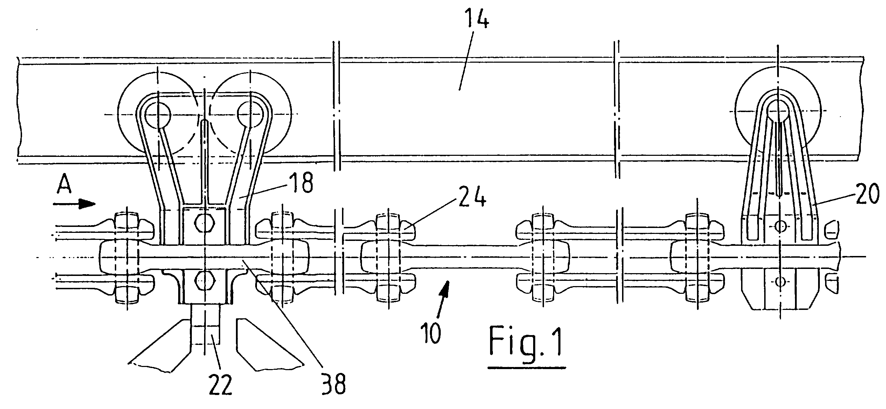

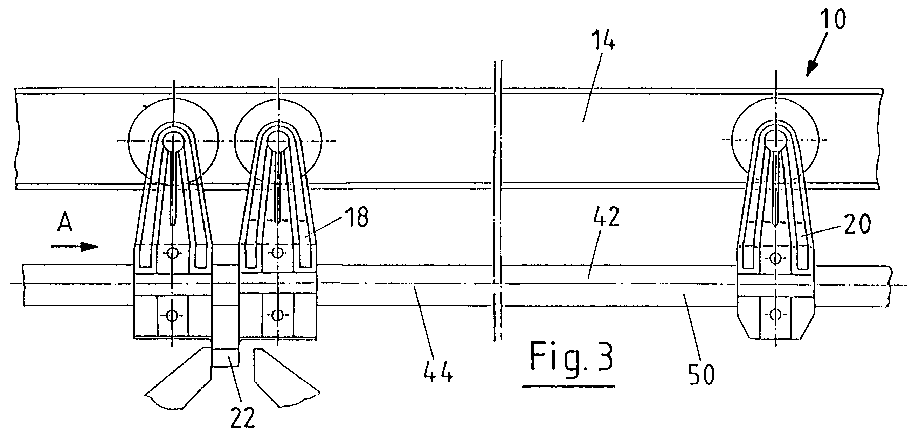

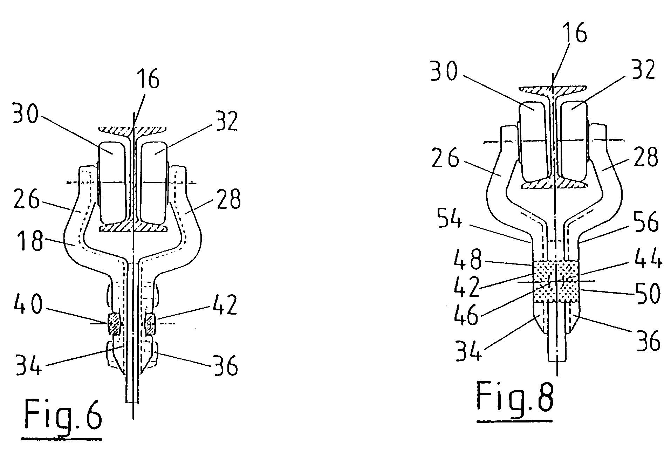

In den Figuren, in denen grundsätzlich gleiche Elemente mit gleichen Bezugszeichen versehen sind, werden Ausschnitte bzw. Detaildarstellungen eines Kreis- bzw. Schleppkreisförderers dargestellt, die vom grundsätzlichen Aufbau her üblichen Konstruktionen entsprechen. Daher wird in den Fig. 1 und 2 bzw. 5 und 6 im Ausschnitt ein Schleppkreisförderer (10) bzw. Kreisförderer (12) herkömmlicher Konzeption dargestellt.

So umfaßt der in Fig. 1 im Ausschnitt dargestellte Schleppkreisförderer (10) (Power- und Free-Förderer) in gewohnter Weise eine Schlepplaufbahn (14) in Form eines I-Profils (16) mit entlang dieser verfahrbaren Laufwerken (18) und (20), wobei das Laufwerk (18) als Schlepplaufwerk ausgebildet ist, von dem ein Mitnehmer (22) ausgeht, der von einer angedeuteten Klinke eines nicht dargestellten Lastlaufwerks erfaßbar ist, welche in einer unterhalb der Schlepplaufbahn verlaufenden Lastlaufbahn ebenfalls in Form eines I-Profils verfahrbar ist. Von dem Lastlaufwerk bzw. einer zwischen zwei aufeinanderfolgenden Lastlaufwerken verbindenden Traverse hängt sodann die zu transportierende Last wie zum Beispiel eine Karosserie oder ein sonstiges Kraftfahrzeugteil ab.

Um die Laufwerke (18), (20) zu verfahren, sind diese mit einem Zugmittel (24) verbunden, welches eine Steck- oder Laschenkette sein kann. Im Ausführungsbeispiel ist als Zugmittel eine Steckkette (24) dargestellt.

Um ein Durchhängen des Zugmittels (24) auszuschließen, sind zwischen Schlepplaufwerken (18) als Abstandshalter dienende Laufwerke vorhanden, die vom Aufbau dem Laufwerk (20) entsprechen.

Unabhängig davon, ob es sich um ein Schlepplaufwerk oder um einen Abstandshalter handelt, weisen die Laufwerke (18), (20) Lagerböcke (26), (28) für Laufräder (30), (32) auf, die entlang der Schlepplaufbahn (14), also dem I-Profil (16) verfahrbar sind.

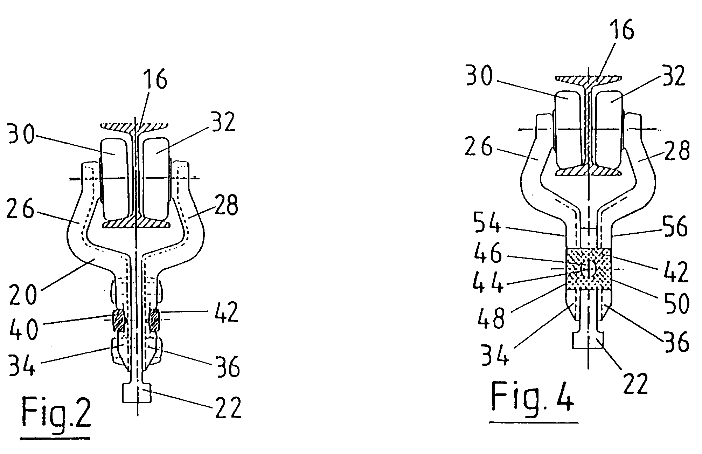

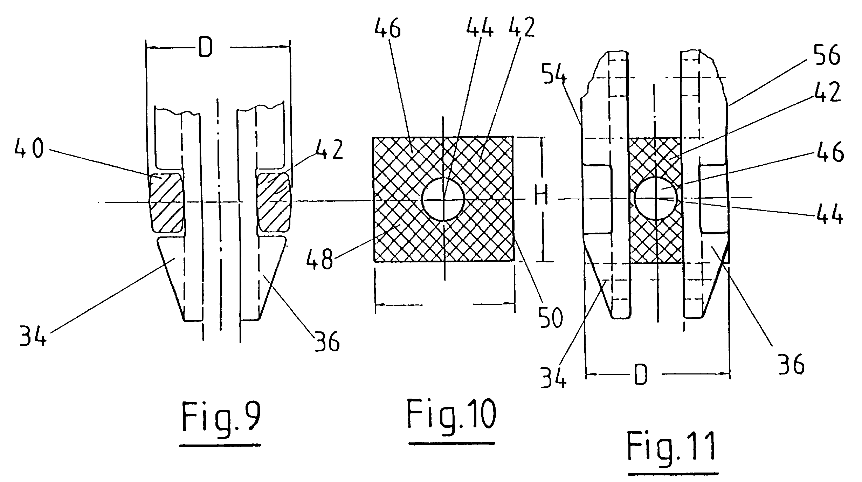

Die Lagerböcke (26) und (28) verlaufen mit ihren unteren vertikalen Abschnitten innerhalb eines Kettengliedes (38), dessen Längsschenkel (40), (42) in den Fig. 2 und 9 schraffiert dargestellt sind. Der äußere Abstand zwischen den Schenkeln (40) und (42) beträgt D.

Ohne die Konstruktion der Schleppkettenförderer (10) vom grundsätzlichen Aufbau zu verlassen, wird erfindungsgemäß vorgeschlagen, daß das Zugmittel (24) in Form der Steck- oder Laschenkette durch einen vorzugsweise eine glatte Außenfläche aufweisenden Gummigurt (42) mit konzentrisch zur Längsachse (44) verlaufender Metalleinlage in Form eines Drahtseils (46) ersetzt wird. Hierdurch erfolgen jedoch grundsätzlich keine Änderungen insbesondere hinsichtlich der Abmessungen der verwendeten Teile des Schleppkreisförderers (10). Daher werden in den Fig. 3 und 4 die Bezugszeichen für die Elemente benutzt, die bereits im Zusammenhang mit dem Schleppkreisförder (10) nach Fig. 1 und 2 verwendet worden sind. Der das erfindungsgemäße Zugmittel (42) aufweisende Schleppkreisförderer ist ferner mit dem Bezugszeichen (10') gekennzeichnet, um die Ähnlichkeit zu unterstreichen.

Erfindungsgemäß wird anstelle des nach dem Stand der Technik benutzten Zugmittels (24) in Form der Steck- oder Laschenkette das im Querschnitt rechteckige und aus Gummi bestehende Zugmittel (42) mit dem einvulkanisierten Drahtseil (46) verwendet, wobei die geometrischen Abmessungen bezüglich des Zugmittels insoweit beibehalten werden, als daß die Breite des Gurtes (42) dem äußeren Abstand D des die Schenkel (36) und (38) der Lagerböcke (26) und (28) umgebenden Kettenglieds (38) entspricht. Daher ist in Fig. 10 die Breite des Gurtes (42) ebenfalls mit D angegeben.

Die Höhe des Gurtes (42) beträgt H, wobei vorzugsweise die Höhe H geringfügig kleiner als die Breite D ist. Vorzugsweise verhält sich D : H wie in etwa 1,2 : 1.

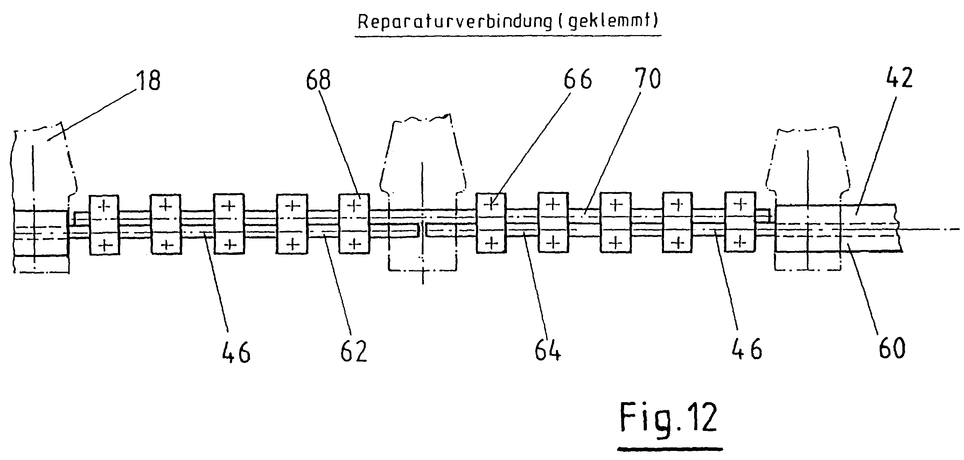

Damit die Lagerböcke (26), (28) bzw. dessen vertikal verlaufende Schenkel (34), (36) den über Reibschluß erfolgenden Antrieb des Gurtes (42) nicht behindern können, weist der Gurt zur Aufnahme der Schenkel (34), (36) entsprechende Ausschnitte auf, wobei vor und hinter den Schenkeln (34), (36) die Seiten- oder Laufflächen (58), (50) bündig in die Seitenflächen (54), (56) der Lagerböcke (26), (28) übergehen. Daher ist der Abstand der Seitenfläche (54), (56) in Fig. 11 ebenfalls mit D gekennzeichnet.

Um die Fahrwerke (18), (20) mit dem Gurt (42) zu verbinden, können am Ort der Montage des Schleppkreisförderers (10') entsprechende Ausschnitte in dem Gurt (42) vorgenommen werden. Hierdurch ergibt sich der Vorteil, daß an jeder gewünschten Stelle ein Fahrwerk positioniert werden kann, eine Möglichkeit, die bei dem Zugmittel Steck- bzw. Laschenkette nicht möglich ist, da die Fahrwerke auf die Kettenglieder ausgerichtet werden müssen.

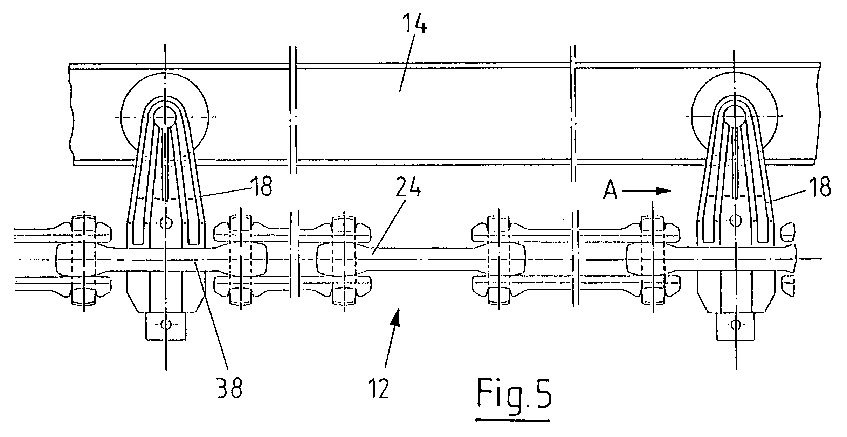

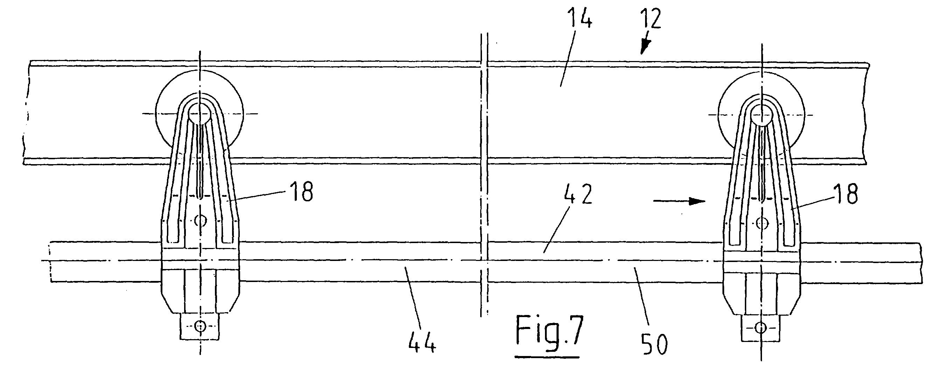

Da sich ein Kreisförderer von einem Schleppkreisförderer nur dadurch unterscheidet, daß Schlepplaufwerke gleichzeitig Lastlaufwerke sind, weisen beim Kreisförderer (12) bzw. (12') der Fig. 5 - 8 der Fig. 1 und 4 entsprechende Elemente gleiche Bezugszeichen auf; denn erwähntermaßen unterscheiden sich der erfindungsgemäße Kreisförderer (12') von dem nach dem Stand der Technik nur dahingehend, daß das Zugmittel (24) in Form einer Steckkette ebenfalls durch ein mit rechteckförmigen Gummigurt (42) mit einvulkanisiertem Drahtseil ersetzt wird.

Durch die erfindungsgemäße Verwendung eines Gummigurts mit einsträngiger Metalleinlage ergeben sich nicht nur in bezug auf die Wartung, des geräuscharmen Betriebs und der Verschleißreduzierung, die mit der Verringerung der Anzahl von Spannstationen einhergeht, Vorteile, sondern es kann auch auf einfache Weise eine Reparatur des Zugmittels (42) erfolgen, wie die Fig. 12 verdeutlicht.

Um voneinander getrennte Abschnitte (58) und (60) des Zugmittels (62) zu verbinden, wird in den Endbereichen das Drahtseil (46) freigelegt, um sodann die freien Enden (62), (64) über Klemmen bzw. Schellen (66), (68) mit einem parallel zu den freien Enden (62), (64) verlaufenden Drahtseilabschnitt (70) zu verbinden.

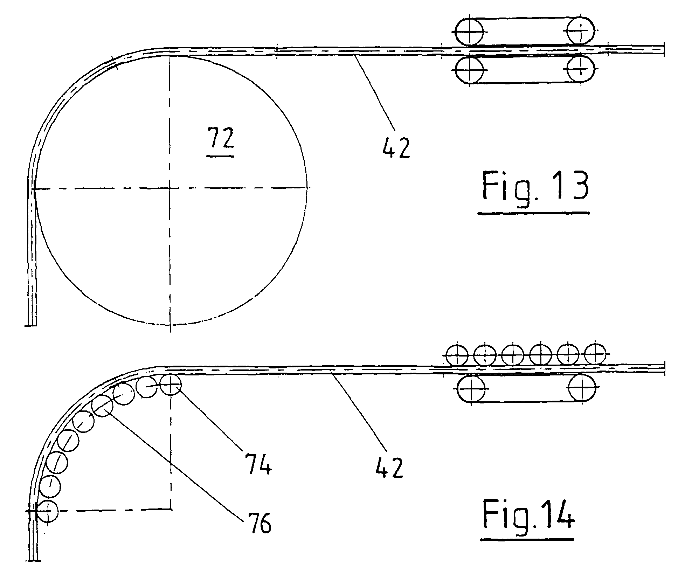

Um den Gurt (42) anzutreiben, kann dieser zwischen Reibrädern geführt werden, die an den Laufflächen (48), (50) anliegen, so daß der Gurt (42) auf einfache Weise entlang der Laufbahn (14) ziehbar ist. Um den Gurt (42) eine Horizontalkurve durchlaufen zu lassen, sind gemäß der Ausführungsbeispiele der Fig. 13 und 14 verschiedene Möglichkeiten gegeben. So wird nach dem Ausführungsbeispiel der Fig. 13 der Gurt (42) entlang eines Abschnitts einer drehbar gelagerten Scheibe (72) geführt.

Beim Ausführungsbeispiel der Fig. 14 wird der Gurt (42) entlang von Rollen (74), (76) geführt, die auf einem Bogen bzw. Kreisabschnitt gelagert sind.

Um vertikale Kurven zu durchfahren, ist es sowohl für den Schleppkreisförderer (10') als auch für den Kreisförderer (12') erforderlich, daß zwischen den Schlepp- bzw. Lastlaufwerken (18) im hinreichenden Umfang Abstandshalter (20) von den jeweiligen Laufbahnen (14) ausgehen, um das Zugmittel (42) zu halten, damit dieses in den Steig- bzw. Gefällstrecken nicht durchhängen bzw. an einer Laufbahn schleifen kann.

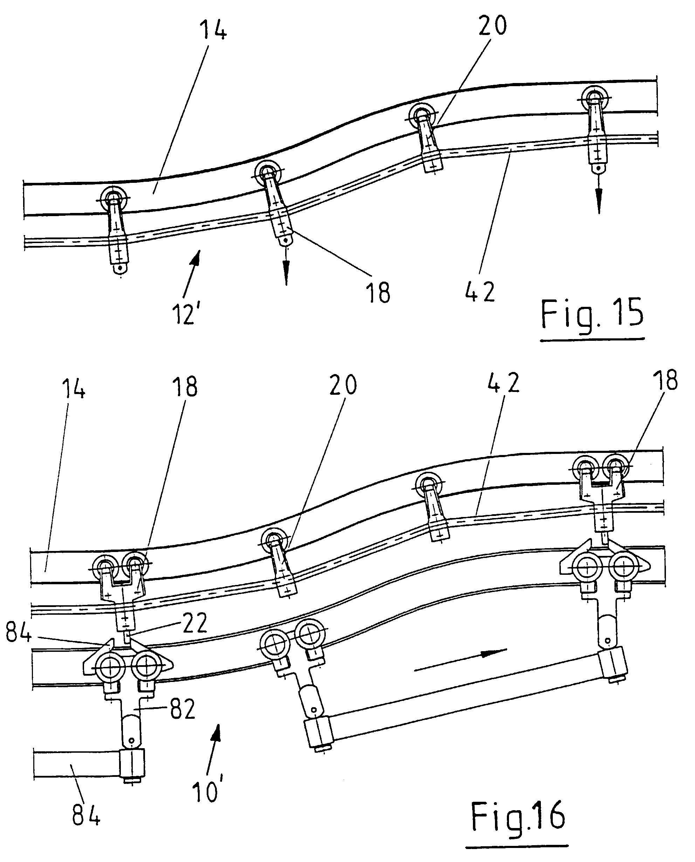

Die Fig. 16 zeigt im Ausschnitt einen Schleppkreisförderer, so daß unterhalb der Schlepplaufbahn (14) eine Lastlaufbahn (78) verläuft, entlang der Lastlaufwerke (80) und (82), die über eine Traverse (84) verbunden sind, verfahrbar sind. Hierzu wirken von dem Lastlaufwerk (82) ausgehende Klinken (84) mit dem Mitnehmer (22) des Schlepplaufwerks (18) zusammen.

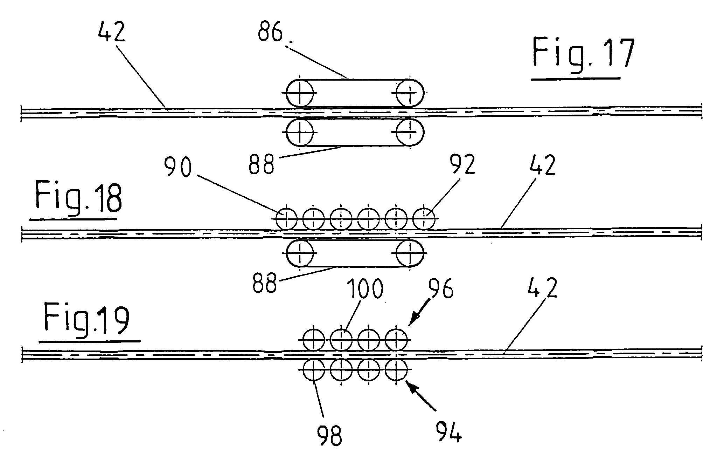

Weitere Antriebsmittel für den Gurt (42) sind den Fig. 17 - 19 zu entnehmen.

So kann der Gurt (42) zwischen umlaufenden Riemen (86), (88) geklemmt werden, um auf diese Weise den erforderlichen Reibschluß herzustellen.

Nach dem Ausführungsbeispiel der Fig. 18 verläuft der Gurt (42) zwischen dem umlaufenden Riemen (88) und entlang einer Linie angeordneten Reibrädern (90), (92).

Entlang von Linien (94, 96) sind nach dem Ausführungsbeispiel der Fig. 19 Reibräder (98), (100) angeordnet, zwischen denen der Gurt (42) durch Reibschluß gezogen wird.

## Patentansprüche

1. Kreis- oder Schleppkreisförderer (10', 12') insbesondere bestimmt zum Transportieren schwerer Lasten wie Kraftfahrzeugteile, mit einer Schlepplaufbahn (14) in Form eines I-Profils mit entlang dieser verfahrbaren Laufwerken (18, 20) mit Rollenböcken (26, 28) zur Lagerung von auf der Schlepplaufbahn sich abstützenden Rollen (30, 32), wobei die Rollenböcke mit einem Zugmittel (42) zum Ziehen der Laufwerke verbunden sind, und wobei bei einem Kreisförderer Laufwerke als Lastlaufwerke und bei einem Schleppkreisförderer Laufwerke als Schlepplaufwerke ausgebildet sind, die mit auf einer unterhalb der Schleppaufbahn verlaufenden Lastlaufbahn (78) verfahrbaren Lastlaufwerken (82) wechselwirken,
**dadurch gekennzeichnet,**
daß das Zugmittel (42) ein aus Gummi- oder Kunststoffmaterial bestehender Gurt ist, der eine einsträngige Einlage (46) aus Metall, Glasfaser oder Kohlefaser aufweist.

2. Kreis- oder Schleppkreisförderer nach Anspruch 1,
**dadurch gekennzeichnet,**
daß der Gurt (42) ein Gummigurt mit im Querschnitt Rechteckform ist und daß die Einlage in Form vorzugsweise einer Metalleinlage wie Drahtseil (46) in dem Gurt einvulkanisiert ist und entlang zu dessen Längsachse (44), vorzugsweise koaxial zu dieser verläuft.

3. Kreis- oder Schleppkreisförderer nach Anspruch 1 oder 2,
**dadurch gekennzeichnet**,
daß der Gurt (42) Ausschnitte zur Aufnahme von Längsschenkeln (34, 36) der Rollenböcke (26, 28) der Laufwerke (18, 20) aufweist, wobei die als Laufflächen ausgebildeten Seitenflächen (48, 50) des Gurtes (52) bündig oder nahezu bündig zu den Außenflächen (54, 56) der Schenkel der Rollenböcke verlaufen.

4. Kreis- oder Schleppkreisförderer nach zumindest einem der vorhergehenden Ansprüche,
**dadurch gekennzeichnet,**
daß der Gurt (42) eine Breite D aufweist, die der einer in einem Kreis- oder Schleppkreisförderer (10, 12) verwendeten Steck- oder Laschenkette (24) entspricht.

5. Kreis- oder Schleppkreisförderer nach zumindest einem der vorhergehenden Ansprüche,
**dadurch gekennzeichnet,**
daß die Metalleinlagen (62, 64) freier Enden (58, 60) des Gurtes (42) freigelegt sind und über Klemmelemente (66, 68) mit einem parallel zu den Enden (62, 64) verlaufenden Drahtseil (70) verbunden sind.

6. Kreis- oder Schleppkreisförderer nach zumindest einem der vorhergehenden Ansprüche,
**dadurch gekennzeichnet**,
daß der Gurt (42) zwischen als Antrieb dienenden Reibrädern (98, 100) geführt ist.

7. Kreis- oder Schleppkreisförderer nach zumindest Anspruch 6,
**dadurch gekennzeichnet,**
daß die Reibräder (98, 100) entlang parallel zueinander verlaufender Linien (94, 96) angeordnet sind.

8. Kreis- oder Schleppkreisförderer nach zumindest einem der vorhergehenden Ansprüche,
**dadurch gekennzeichnet**,
daß der Gurt (42) zwischen als Antrieb dienenden umlaufenden Riemen (86, 88) geführt ist.

9. Kreis- oder Schleppkreisförderer nach zumindest einem der vorhergehenden Ansprüche,
**dadurch gekennzeichnet**,
daß auf einer Seite des Gurtes (42) ein umlaufender Riemen (88) anliegt und auf der gegenüberliegenden Seite und dem Riemen zugeordnet entlang einer Linie verlaufende Andruckrollen (90, 92) angeordnet sind.

10. Kreis- oder Schleppkreisförderer nach zumindest einem der vorhergehenden Ansprüche,
**dadurch gekennzeichnet**,
daß zur Bildung einer Horizontalkurve der Gurt (42) entlang eines Abschnitts einer drehbar gelagerten Scheibe (72) geführt ist.

11. Kreis- oder Schleppkreisförderer nach zumindest einem der vorhergehenden Ansprüche,
**dadurch gekennzeichnet,**
daß zur Bildung einer Horizontalkurve der Gurt (42) entlang von Rollen (74, 76) geführt ist, die auf einem Bogen- wie Kreisabschnitt gelagert sind.

12. Kreis- oder Schleppkreisförderer nach zumindest einem der vorhergehenden Ansprüche,
**dadurch gekennzeichnet**,
daß der Querschnitt des Gurtes ein Rechteck ist, dessen Breite zur Höhe sich verhält wie etwa 1,2 : 1.

13. Verwendung eines aus Gummi- oder Kunststoffmaterial bestehenden Gurtes (42) mit entlang zu dessen Längsachse (44) verlaufender Einlage (46) aus Metall, Glasfaser oder Kohlefaser als Ersatz für eine Steck- oder Laschenkette (24) eines Kreis-, Schleppkreis- oder Bodenförderers (10, 10', 12, 12'), wobei der Gurt eine Breite D aufweist, die der oder in etwa der Breite eines Gliedes (38) der Steck- bzw. Laschenkette entspricht.

14. Verwendung eines aus Gummi- oder Kunststoffmaterial bestehenden Gurtes (42) mit entlang zu dessen Längsachse (44) verlaufender Einlage (46) aus Metall, Glasfaser oder Kohlefaser als Ersatz für eine Steck- oder Laschenkette (24) eines Kreis-, Schleppkreis- oder Bodenförderers (10, 10', 12, 12'), wobei der Gurt eine Zerreißfestigkeit aufweist, die zumindest der einer Steck- oder Laschenkette eines Kreis-, Schleppkreis- oder Bodenförderers entspricht.

## Claims

1. A mono- or twin-rail overhead chain conveyor (10', 12') in particular for transporting heavy loads such as motor vehicle parts, having a chain track (14) in the form of an I-shaped profile with running gear (18, 20) which can move along said track and having roller blocks (26, 28) for mounting rollers (30, 32) which are supported on said chain track, said roller blocks being connected to a traction means (42) for pulling said running gear and said running gear being designed for a mono-rail overhead chain conveyor in the form of loading running gear and for a twin-rail overhead chain conveyor in the form of towing running gear which interacts with loading running gear (82) movable on a load rail (78) running below said chain track,
**wherein**
a belt comprising a rubber or plastic material with a single-stranded insert (46) of metal, glass fiber or carbon fiber is used as said traction means (42).

2. A mono- or twin-rail overhead chain conveyor according to Claim 1,
**wherein**
said belt (42) is a rubber belt with rectangular cross-section and said insert is vulcanized into said belt preferably in the form of a metal insert such as a wire rope (46) and runs preferably coaxially thereto along its longitudinal axis (44).

3. A mono- or twin-rail overhead chain conveyor according to Claim 1 or 2,
**wherein**
said belt (42) has cutouts for accommodating sides (34, 36) of roller blocks (26, 28) of said running gear (18, 20), with the lateral surfaces (48, 50) of said belt (52) designed as running surfaces are flush or almost flush with the outer surfaces (54, 56) of the sides of said roller blocks.

4. A mono- or twin-rail overhead chain conveyor according to at least one of the preceding claims,
**wherein**
said belt (42) has a width D corresponding to that of a bolt-linked or flat-linked chain (24) used in a mono- or twin-rail overhead chain conveyor (10', 12').

5. A mono- or twin-rail overhead chain conveyor according to at least one of the preceding claims,
**wherein**
the metal inserts (62, 64) of free ends (58, 60) of said belt (42) are exposed and connected to a wire rope (70) running parallel to said ends (62, 64) by clamping elements (66. 68).

6. A mono- or twin-rail overhead chain conveyor according to at least one of the preceding claims,
**wherein**
said belt (42) is guided between friction wheels (98, 100) used as the drive.

7. A mono- or twin-rail overhead chain conveyor according to at least Claim 6,
**wherein**
said friction wheels (98, 100) are disposed along lines (94, 96) running parallel to one another.

8. A mono- or twin-rail overhead chain conveyor according to at least one of the preceding claims,
**wherein**
said belt (42) is guided between endless belts (86, 88) used as the drive.

9. A mono- or twin-rail overhead chain conveyor according to at least one of the preceding claims,
**wherein**
along an endless drive belt is in contact with one side of said belt (42) and several pressure rollers (90, 92) are disposed along a line and associated with said drive belt on the opposite side.

10. A mono- or twin-rail overhead chain conveyor according to at least one of the preceding claims,
**wherein**
for formation of a horizontal curve said belt (42) is guided along a section of a rotatably mounted disk (72).

11. A mono- or twin-rail overhead chain conveyor according to at least one of the preceding claims,
**wherein**
for formation of a horizontal curve said belt (42) is guided along a rollers (74, 76) mounted on an arc or circular section.

12. A mono- or twin-rail overhead chain conveyor according to at least one of the preceding claims,
**wherein**
the cross-section of said belt is a rectangle whose width to height ratio is approximately 1.2:1.

13. Use of a belt (42) comprising a rubber or plastic material with an insert (46) of metal, glass fiber or carbon fiber running along the longitudinal axis (44) of said belt as a substitute for a bolt-linked or flat-linked chain (24) of a mono-rail or twin-rail overhead chain conveyor or a floor conveyor(10, 10', 12, 12'), said belt having a width D corresponding or approximately corresponding to that of a link (38) of said bolt-linked or flat-linked chain.

14. Use of a belt (42) comprising a rubber or plastic material with an insert (46) of metal, glass fiber or carbon fiber running along the longitudinal axis (44) of said belt as a substitute for a bolt-linked or flat-linked chain (24) of a mono-rail or twin-rail overhead chain conveyor or a floor conveyor(10, 10', 12, 12'), said belt having a tensile strength corresponding at least to that of a bolt-linked or flat-linked chain of a mono-rail or twin-rail overhead chain conveyor or a ground conveyor.

## Revendications

1. Convoyeur aérien à voie simple ou à voie double (10', 12'), convenant en particulier pour transporter des charges lourdes telles que des pièces de véhicules, comportant une voie mécanisée (14) présentant la forme d'un profilé en I, avec le long de celle-ci des trains de roulement (18, 20) dotés de chevalets à galets (26, 28) servant à reprendre des galets (30, 32) s'appuyant sur la piste mécanisée, les chevalets à galets étant reliés à un moyen de traction (42) servant à tirer les trains de roulement, tandis que sur un convoyeur aérien à simple voie, les trains de roulement sont configurés comme trains de roulement chargés et que sur un convoyeur aérien à voie double, les trains de roulement sont configurés comme trains de roulement mécanisés interagissant avec des chariots de charge (82) pouvant être déplacés sur une voie chargée (78) s'étendant en dessous de la voie mécanisée,
caractérisé en ce que
le moyen de traction (42) est une courroie réalisée en caoutchouc ou en matière synthétique, qui présente une garniture interne (46) constituée d'un seul brin en métal, en fibres de verre ou en fibres de carbone.

2. Convoyeur aérien à voie simple ou à voie double selon la revendication 1, caractérisé en ce que la courroie (42) est une courroie en caoutchouc à section transversale rectangulaire, et en ce que la garniture interne, qui présente de préférence la forme d'une garniture interne en métal tel qu'un câble métallique (46), est incorporée dans la courroie par vulcanisation et s'étend le long de son axe longitudinal (44), et de préférence coaxialement par rapport à ce dernier.

3. Convoyeur aérien à voie simple ou à voie double selon les revendications 1 ou 2, caractérisé en ce que la courroie (42) présente des parties pour la réception de branches longitudinales (34, 36) des chevalets à galets (26, 28) des trains de roulement (18, 20), les surfaces latérales (48, 50), configurées comme surfaces de roulement, de la courroie (52), s'étendant de manière à affleurer ou à pratiquement affleurer par rapport aux surfaces externes (54, 56) des branches des chevalets à galets.

4. Convoyeur aérien à voie simple voie ou à voie double selon au moins l'une des revendications précédentes, caractérisé en ce que la courroie (42) présente une largeur D qui correspond à celle d'une chaîne à broches ou d'une chaîne articulée (24) utilisée dans un convoyeur aérien à voie simple ou à voie double (10, 12).

5. Convoyeur aérien à voie simple ou à voie double selon au moins l'une des revendications précédentes, caractérisé en ce qu'aux extrémités libres (58, 60) de la courroie (42), les garnitures intemes métalliques (62, 64) sont libres et sont reliées par des éléments de pinçage (66, 68) à un câble de traction (70) s'étendant parallèlement aux extrémités (62, 64).

6. Convoyeur aérien à voie simple ou à voie double selon au moins l'une des revendications précédentes, caractérisé en ce que la courroie (42) est guidée entre des roues de friction (98, 100) qui servent d'entraînement.

7. Convoyeur aérien à voie simple ou à voie double selon au moins la revendication 6, caractérisé en ce que les roues de friction (98, 100) sont disposées le long de lignes (94, 96) qui s'étendent parallèlement l'une à l'autre.

8. Convoyeur aérien à voie simple ou à voie double selon au moins l'une des revendications précédentes, caractérisé en ce que la courroie (42) est guidée entre des sangles (86, 88) en boucle fermée qui servent d'entraînement.

9. Convoyeur aérien à voie simple ou à voie double selon au moins l'une des revendications précédentes, caractérisé en ce que sur un côté de la courroie (42) vient se placer au moins une sangle (88) en boucle fermée, et en ce que sur le côté opposé et associé à la sangle, sont disposés des galets de pression (90, 92), disposés en ligne.

10. Convoyeur aérien à voie simple ou à voie double selon au moins l'une des revendications précédentes, caractérisé en ce que pour former une courbe horizontale, la courroie (42) est guidée le long d'une partie d'une poulie (72) montée de manière à pouvoir tourner.

11. Convoyeur aérien à voie simple ou à voie double selon au moins l'une des revendications précédentes, caractérisé en ce que pour former une courbe horizontale, la courroie (42) est guidée le long de galets (74, 76) qui sont montés sur un tronçon courbe, par exemple un arc de cercle.

12. Convoyeur aérien à voie simple ou à voie double selon au moins l'une des revendications précédentes, caractérisé en ce que la section transversale de la courroie est un rectangle dont le rapport entre la largeur et la hauteur vaut environ 1,2:1.

13. Utilisation d'une courroie (42) réalisée en caoutchouc ou en matière synthétique, comportant une gamiture interne (46) en métal, en fibres de verre ou en fibres de carbone qui s'étend le long de son axe longitudinal (44), pour remplacer une chaîne à broches ou une chaîne articulée (24) d'un convoyeur aérien ou au sol à voie simple ou à voie double (10, 10', 12, 12'), la courroie présentant une largeur D qui correspond à la largeur ou sensiblement à la largeur d'un élément (38) de la chaîne à broches ou de la chaîne articulée.

14. Utilisation d'une courroie (42) réalisée en caoutchouc ou en matière synthétique, comportant une garniture interne (46) en métal, en fibres de verre ou en fibres de carbone s'étendant le long de son axe longitudinal (44), pour remplacer une chaîne à broches ou une chaîne articulée (24) d'un convoyeur aérien ou de sol à voie simple ou à voie double (10, 10', 12, 12'), la courroie présentant une résistance à la déchirure qui correspond au moins à celle d'une chaîne à broches ou d'une chaîne articulée d'un convoyeur aérien ou de sol à voie simple ou à voie double.
